# EUROPÄISCHE PATENTSCHRIFT

(11) **EP 2 031 940 B1**
(45) Veröffentlichungstag und Bekanntmachung des Hinweises auf die Patenterteilung: **20.03.2013**
(21) Anmeldenummer: 08163063.4
(22) Anmeldetag: 27.08.2008
(51) Int. Cl.: H05B 33/08, H03G 1/00

(54) **LED-Clusteranordnung mit Konstantstromschalter**
LED cluster assembly with constant current switch
Agencement de grappe DEL doté d'un commutateur à courant continu

(30) Priorität: 27.08.2007 DE 202007011973 U
(43) Veröffentlichungstag der Anmeldung: 04.03.2009
(73) Patentinhaber: Ruppel, Stefan, 36124 Eichenzell (DE)
(72) Erfinder: Ruppel, Stefan, 36100 Petersberg (DE)
(74) Vertreter: Schoppe, Fritz

(56) Entgegenhaltungen:
- WO-A1-2007/023454
- DE-A1- 10 201 906
- DE-A1- 10 257 184
- DE-U1-202006 014 351
- US-A- 4 378 528
- US-A- 5 661 645
- US-A1- 2005 156 103
- US-A1- 2007 109 763
- US-B1- 6 459 919
- Dr.-Ing. Ulrich Tietze, Dr.-Ing. Christoph Schenk: "Halbleiter-Schaltungstechnik", 1978, Springer-Verlag, Germany ISBN: 3-540-06667-5 pages 38-40, * page 38 - page 40 * * paragraph [4.2.3] *

## Beschreibung

Die Erfindung betrifft eine Leuchtanordnung für Allgemein-Leuchten einschließlich Möbel- oder Vitrinenleuchten, wobei auf einer gemeinsamen Platine ein oder mehrere Cluster jeweils mit mehreren LED-Modulen oder auch ein oder mehrere Netze derartiger Cluster aufgebracht sind. Unter "LED-Modul" wird eine Baueinheit verstanden, die sowohl ein diskretes Einzel-LED mit zwei Anschlüssen als auch ein so genanntes LED-Chip mit mehreren LEDs (LED = Light Emitting Diode bzw. Luminiszenz- bzw. Leuchtdiode) umfassen kann. Eine diskrete Einzel-LED bzw. Leuchtdiode wird durch einen pn-Übergang ausgemacht, bei dem es bei Stromfluss in Durchlassrichtung zu einer Lichtemission kommt.

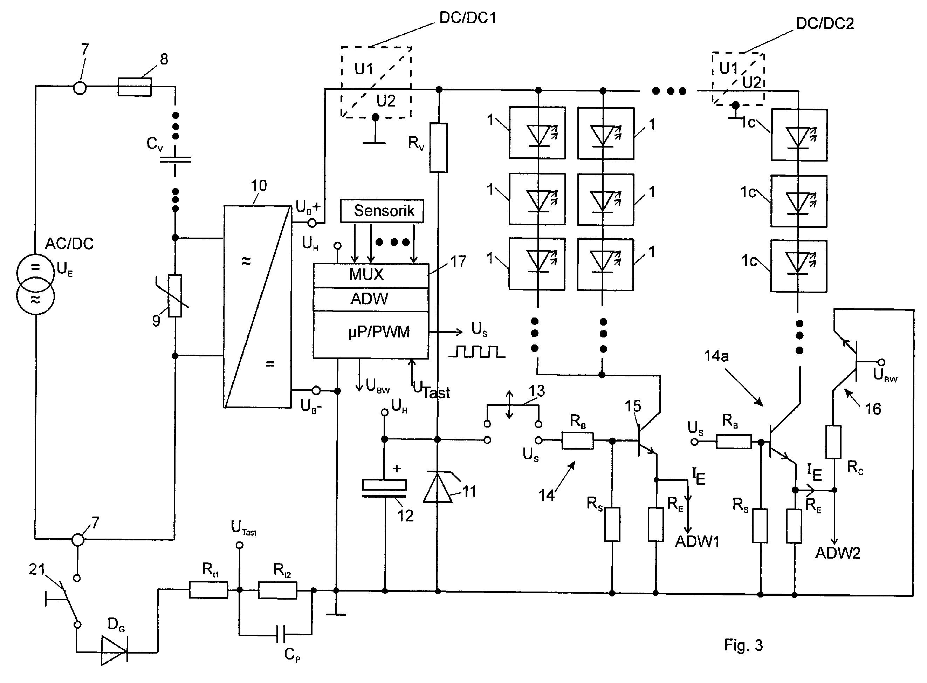

Aus DE 198 18 403 A1 sind Leuchten und Lampen in der Ausführung als Lichtquellen-Leistungs-LEDs beschrieben. Durch die Kombinierbarkeit der LED-Bausteine/-Module sollen Leuchten aller Art, die ursprünglich mit herkömmlichen Lampen bestückt waren, einfach umgerüstet werden. Weiter wird vorgeschlagen die LED-Bausteine auf einem flachen, einstückigen Träger dicht zu einem Cluster anzuhäufen. Solche können in Kunststoff vergossen sein und so steckbare Montageeinheiten bilden. Bei LED-Bestückung wird eine Konstantstromregelung vorgeschlagen. Weiter ist vorgeschlagen, die LEDs einzeln oder gruppenweise mit einem (elektronischen) Dimmer zu verbinden, der farbselektiv ausgebildet ist. Der Dimmer arbeitet dabei auf der Basis des Pulsweitenmodulations-Prinzips. Gemäß dortiger Figur 3 sind die mehreren LEDs eines Clusters mit einem gemeinsamen Abstrahlprofil bzw. Linse abgedeckt.

In DE 20 2006 014 351 U1 ist eine Leuchtanordnung mit mehreren auf einer Leiterplatte aufgebrachten LED-Cluster beschrieben, die jeweils mehrere LED-Chips aufweisen, die mit einer gemeinsamen Vergussmasseschicht überzogen sind. Diese Vergussmasseschicht kann eine Linsenform zur Emission isotroper Lichtstrahlung bilden. Die LED-Chips umfassen jeweils drei Licht in den Spektralfarben Rot, Grün und Blau emittierende Leuchtdioden. Ferner ist auf der Leiterplatte/Platine eine Elektronik zur Realisierung eines Konstantstrombetriebs des jeweiligen LED-Moduls/Chips und zur Ansteuerung der LED-Cluster angeordnet. Dadurch soll eine Stromversorgung der einzelnen Leuchtdioden gewährleistet sein.

In DE 200 09 202 U1 ist eine solarbetriebene LED-Anordnung beschrieben, bei der mit einem Cluster von LEDs eine Innenbeleuchtung realisierbar sein soll. Als diskrete Einzel-LEDs werden Typen mit einer Vorwärtsspannung von vier Volt bei einem Vorwärtsstrom von 20mA vorgeschlagen. Die LEDs werden in SMD-Technik (Surface Mounted Device) zusammen mit Elektronikkomponenten und einer Lade- und Entladeschaltung auf einer Platine angeordnet. Ferner ist beschrieben, dass sich die LEDs an einem Regel- und Steuermodul anordnen lassen.

In DE 198 37 224 A1 ist eine LED-Leuchteinrichtung insbesondere mit hellen bzw. superhellen LEDs beschrieben, die zu unterschiedlichen Clustern oder Clusteranordnungen modulartig zusammenstellbar sind, um für jedweden Einsatzzweck und jedwede Anforderung verwendbar zu sein. Ein Cluster ist mit optischen Systemen in Form von Linsen für die lichtabstrahlenden Dioden ausgestattet. Unterhalb des Leuchtdiodenträgers ist eine Energieversorgungs- und Steuereinrichtung angeordnet, welche zur Verlustminimierung eine PWM(Pulsweitenmodulation)-Einrichtung, eine Leistungsadaptions- und Sensoreinheit sowie einen Controller (z.B. Einchip-Mikrocomputer Intel 8051) mit angeschlossenem Modem aufweist. Die Steuerung beinhaltet die Regelung der Abstrahlintensität der Dioden, die Auswahl der Richtungen und Farben, in der bzw. mit welcher Licht abgestrahlt werden soll, einen zeitabhängig gesteuerten Ein- und/oder Ausbetrieb sowie eine Diodenüberwachung.

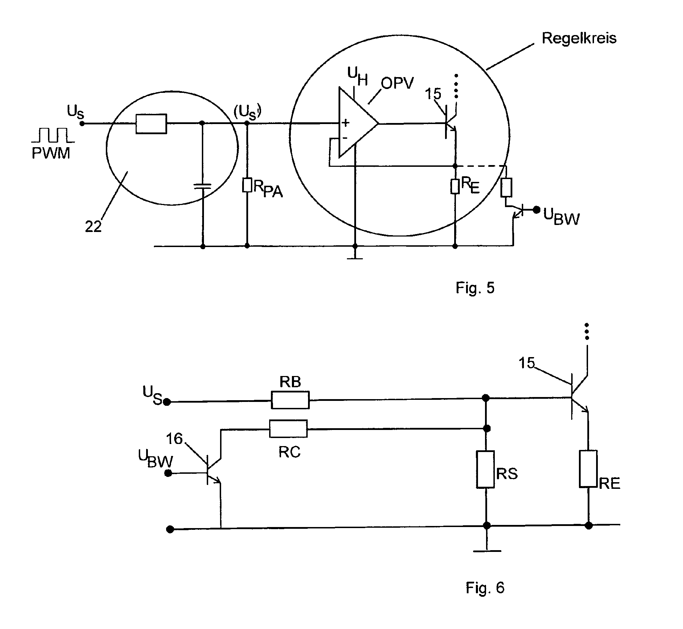

In der US 6 459 919 B1 werden in allgemeinem und breitem Umfang Präzisionsbeleuchtungsverfahren und -systeme beschrieben. Als Anwendungsbeispiele sind biologische Einheiten, medizinische Anwendungen und diagnostische und therapeutische Eingriffe genannt. Dazu wird eine Stromsteuerung für eine Leuchtanordnung offenbart, welches ein LED-System oder eine LED-Leuchtanordnung sein kann. Die Stromsteuerung erfolgt auf der Basis einer Pulsweitenmodulation ("PWM"). Jede stromgesteuerte Einheit ist im Rahmen eines Computer-Leuchtnetzwerks eindeutig adressierbar zwecks Informationsempfang. Ferner ist auch allgemein von einer stromgeregelten LED-Leuchtvorrichtung ("current-regulated LED lighting apparatus") geschrieben. In der Figur 3 dieser US 6 459 919 B1 wird dann vorgeschlagen, die Stromeinstellung über Dimensionierung von ohmschen Widerständen auf Werte von 70 bzw. 50 Milliampere (23 mA bzw. 10 mA pro LED) vorzunehmen. Gemäß dortiger Figur 6 werden Reihen mit LEDs über Schalttransistoren versorgt, welche jeweils von einem Prozessor angesteuert werden. Eine Rückkopplung bzw. Gegenkopplung eines repräsentativen Werts für den Stromfluss durch die LEDs im Sinne eines geschlossenen Regelkreises ("closed loop control") ist allerdings nicht erkennbar.

Aus der DE 102 01 906 A1 ist eina signalgeberleuchte bekannt, bei der der Strom durch eine Sevienschaltung mehrerer LEDs durch einen strombestimmenden Emitter widerstand eines Stromquellen transistors bestimmt wird.

Die Erfindung schafft eine Leuchtanordnung nach Anspruch 1 vorgeschlagen. Vorteilhafte, optionale Ausgestaltungen und Ausführungsbeispiele ergeben sich aus den abhängigen Unteransprüchen.

Indem erfindungsgemäß auf der LED-Platine zu deren Stromversorgung eine schaltbare Stromquelle bzw. -senke angeordnet ist, ergeben sich Möglichkeiten mannigfaltigen Strommanagements, das sich insbesondere unter der Zielsetzung der Verlustminimierung optimieren lässt. Beispielsweise lässt sich über Pulsweiten-Modulation das Verhältnis der Ein/Auszeiten der schaltbaren Stromquelle bzw. -senke an Umgebungsbedingungen anpassen, wozu nur ein Betätigen des Ansteuereingangs der Stromschalteinrichtung notwendig ist, was mittels einer Steuerung nach intelligenten Einschalt- /Ausschaltmustern leicht und einfach zu realisieren ist. So lässt sich der Ansteuereingang beispielsweise gemäß einer Pulsweitenmodulation mit Signalen dahingehend speisen, dass der Energieverbrauch und damit die Verluste der ein oder mehreren LED-Cluster entsprechend den Umgebungsbedingungen (zum Beispiel Tageslicht, Dämmerungslicht, Nacht) variiert wird.

Ein weiterer Erfindungsvorteil besteht darin, dass zur Realisierung der Stromschalteinrichtungen einfache Bausteine auf dem Markt erhältlich bzw. einfache Schaltungen bekannt sind, so dass ohne großen Kostenaufwand je einem Cluster oder verschiedenen Cluster-Gruppen bzw. - Netzen je eine Stromschalteinrichtung auf der gemeinsamen Platine ohne nennenswertem Platzverbrauch zugeordnet werden kann. Daraus ergibt sich der weitere Vorteil, dass über eine Lichtsteuerung unterschiedliche LEDs zeitlich versetzt angesteuert werden können.

Gemäß einer optionalen Erfindungsausbildung umfasst die Stromschalteinrichtung eine vorzugsweise schaltbare Konstantstromquelle, insbesondere einen Konstantstromschalter. Die Konstantstromquelle respektive der Konstantstromschalter ermöglichen das präzise Einprägen eines bestimmten Stromflusses in die jeweiligen pn-Übergänge der Einzel-LEDs innerhalb der LED-Module und -Cluster. Dadurch ist Vorsorge gegen eine Überlastung der Einzel-LEDs getroffen und die Betriebssicherheit und -zuverlässigkeit erhöht. Nach einer weiteren, optionalen Ausgestaltung dieses Gedankens ist die Konstantstromquelle so eingestellt, dass für jedes diskrete Einzel-LED ein Stromstärkenbereich von etwa 5 - 50 mA nicht über- und unterschritten wird. Damit lässt sich ein auch für Standard-LEDs (im Gegensatz zu Leistungs-LEDs mit einem Stromdurchfluss im Bereich von beispielsweise 100mA bis 1500 mA und mehr) eine tolerierbare Stromstärke zuverlässig einhalten. Die dabei erzielte Verlustminimierung geht auf die auf 50mA begrenzte Stromstärke zurück. Die Konstantstromquelle ist zweckmäßig mit dem Ansteuereingang verbunden oder von diesem beeinflusst. So lässt sich der Strom mit maximaler und konstanter Stärke gezielt für bestimmte Zeiten ein- und ausschalten bzw. "pulsen". Mit diesem Pulsen der Konstantstromquelle bzw. mit dem Pulsbetrieb des Konstantstromschalters kann eine gewünschte Helligkeit und Leuchtstärke realisiert werden.

Diese Erfindungsausbildung ermöglicht insbesondere bei Verwendung von Clusterstrukturen den Einsatz von Standard-LEDs in Allgemeinleuchten, wobei der mögliche Strombereich 5mA bis 50mA die bei Hochstrom-/Leistungs-LEDs nachteilig hohe Wärmeentwicklung und Verlustleistung nebst deshalb notwendiger Kühlung vermeidet. Auch der Betrieb mehrerer LED-Module in einem gemeinsamen Gehäuse und/oder unter einer gemeinsamen (Linsen-)Optik wird mit dieser Standard-LED-Erfindungsausbildung praktikabel. Ferner entfällt mit dieser Ausbildung die Notwendigkeit aufwendiger Stromversorgungen, beispielsweise getakteter Treiberschaltungen für hohe Ströme. Stehen bei Kraftfahrzeug- oder Solareergieanwendung naturgemäß nur geringe Ausgangsspannungen, beispielsweise 12 Volt, zur Verfügung, ist aufgrund dieser Ausbildung die leistungselektronisch aufwendige Erzeugung von Konstantströmen von beispielsweise 350 mA und mehr nicht mehr notwendig.

Gemäß einer weiteren optionalen Erfindungsausbildung ist bei der Leuchtanordnung die Stromschalteinrichtung mit einem Regelkreis mit einem Regler mit vorgeschaltetem Soll-/Istwertvergleicher versehen, der eingangsseitig mit dem Ansteuereingang (Uₛ) und, zum Vergleich damit, mit einer Signalquelle verbunden ist, deren Ausgangsgröße dem Stromfluss durch ein diskretes Einzel-LED des jeweiligen LED-Moduls (5) entspricht. Ausgangsseitig ist der Regler mit der Stromschalteinrichtung zu deren Ansteuerung gekoppelt. In weiterer Konkretisierung lässt sich dieser Regelkreis mit einem Operationsverstärker realisieren, der eingangsseitig mit dem LED-Stromfluss und dem Ansteuereingang (Uₛ) entsprechenden Spannungssignalen und ausgangsseitig mit der oder den Stromschalteinrichtungen verbunden ist.

Um die Leuchtanordnung für unterschiedliche LED-Typen mit variierten Strombereichen kompatibel zu machen, ist nach einer optionalen Erfindungsweiterbildung vorgesehen, Stromstärke-Einstellmittel auf der Platine anzuordnen. Diese sind ebenfalls mit einem Ansteuereingang versehen, worüber sich die Stromstärke einstellen lässt. Einem "Ein- bzw. Ausschalten" bzw. "Zuschalten" bestimmter Strombereiche ist der Weg eröffnet.

Eine weitere optionale Erfindungsausbildung besteht darin, mehrere LED-Module eines Clusters und/oder auch mehrere Cluster mit einer gemeinsamen Optik, insbesondere Linsenoptik abzudecken. Damit lässt sich eine vorspezifizierte Anisotropie für die Lichtemission erzielen und die Ausbreitung von Streulicht vermeiden. Zudem kann die Abdeck-Optik in Ausübung einer Zusatzfunktion mit zur Stabilisierung des Abdeck- und Gehäuseaufbaus herangezogen werden.

Zweckmäßig ist im Rahmen der Erfindung ein Verbindungsmechanismus, mittels welchem der Ansteuereingang der Stromschalteinrichtung alternativ an die Ausgänge unterschiedlicher Funktionskomponenten wie Sensorausgänge, Steuerausgänge usw. anlegbar ist. Beispielsweise kann eine geeignete Verbindungseinrichtung mittels eines Kurzschluss herstellenden Verbindungsbügels bzw. "Jumpers" realisiert sein, wie an sich bekannt.

Nach einem weiteren erfindungsgemäßen Ausführungsbeispiel sind die oben angesprochenen Stromstärke-Einstellmittel mit einem Ansteuereingang versehen, der mit einem Ausgang der genannten Steuerung verbunden ist. Diese ist dann zweckmäßig programm- und/oder schaltungstechnisch dazu eingerichtet, beispielsweise in einem FestwertSpeicher abgelegte Parameter für gewünschte Helligkeit und/oder LED-Eigenschaften in entsprechende Muster für den Ansteuereingang der Stromstärke-Einstellmittel umzusetzen. Auch dazu ist es zweckmäßig, die Steuerung mittels an sich bekannter Einchip-Mikrocomputer zu realisieren, welche an sich auf dem Markt kostengünstig erhältlich sind.

Eine vorteilhafte Erfindungsausbildung besteht darin, auf der Platine einen Gleichrichter und/oder einen Gleichstromsteller (beispielsweise Step-up-Konverter, wenn eine externe Quellengleichspannung von beispielsweise nur 0,3 Volt aus Solarenergie zur Verfügung steht) für die externe Wechsel- oder Gleichspannungsquelle anzuordnen. Auf der Platine ist eine Clusterbetriebsspannung oder Betriebs-Gleichspannung von etwa 3,5 Volt bis 48 Volt, beispielsweise 12 Volt vorteilhaft. Eine Spannungsanpassung mit Gleichstromstellern je nach Aufgabenstellung ist in der Fachwelt grundsätzlich bekannt. So ist es beispielsweise zweckmäßig, mit der jeweiligen Aufgabe angepassten Spannungswandlern (DC-DC-Wandler, Step-up-, Step-down-Konvertern, SEPIC-Wandler (SEPIC= Single Ended Primary Inductance Converter), Hochspannungskaskaden beziehungsweise Villard-Vervielfacherschaltung bei Wechselstromeinspeisung etc.). die Betriebsspannung U_{B} den LED-Stromkreisen anzupassen. Damit lässt sich insbesondere auch eine Eingangsspannungs-Toleranzausregelung günstig realisieren.

Ferner sind am Gleichrichter-Ausgang eine oder parallel mehrere Reihenschaltungen angelegt. Diese bestehen einerseits aus mindestens einem LED-Modul oder auch aus Netzen von LED-Clustern (die Netze können sowohl Cluster-Reihenschaltungen als auch Cluster-Parallelschaltungen als auch Kombinationen von beiden umfassen) und andererseits aus einer mit der oder den jeweiligen LED-Clusteranordnungen in Serie befindlichen Stromschalteinrichtung, vorzugsweise Konstantstromschalter. Mit dieser Konfiguration lassen sich flexibel Gruppen von LED-Modulen oder LED-Clustern selektiv ansteuern, wodurch Lichteffekte in großer Vielfalt realisiert werden können. Zweckmäßig liegen die genannten Reihenschaltungen mit je einer Stromschalteinrichtung parallel am Gleichrichterausgang an. Die jeweiligen Stromschalteinrichtungen können so entweder zeitgleich oder zeitlich versetzt von der Steuerung betätigt werden.

Ein erfindungsgemäßes Ausführungsbeispiel beinhaltet eine auf der Platine vorzugsweise angebrachte, von extern versorgte oder versorgbare Gleichspannungsquelle, von der aus wiederum eine Hilfsspannungsquelle mit gegenüber der erstgenannten Gleichspannungsquelle herabgesetzter Ausgangsspannung abgeleitet wird. Dies kann beispielsweise einfach über Spannungsteiler erfolgen. Die so erzeugte Hilfsspannung lässt sich flexibel verwenden, insbesondere an Stelle des Steuerungsausgangs mit dem Ansteuereingang der Stromschalteinrichtung verbinden, wenn lediglich ein einfaches, gleichmäßiges Durchfließen der pn-Übergänge in den LED-Modulen gewünscht ist, ohne besondere Steuerungseffekte. Weiter lässt sich die Hilfsspannung zweckmäßig zur Stromversorgung für die Steuerung auf der Platine (mit-)verwenden. Der Vorteil einer kompakten Bauweise ist augenfällig.

Es liegt im Rahmen optionaler Ausgestaltungen der Erfindung, Zustandsanzeigen mit farbigen LEDs und/oder Orientierungssignallicht mit LEDs als Orientierungskomfort und/oder zu Notbeleuchtungszwecken zu integrieren.

Ferner liegt es im Rahmen optionaler Ausgestaltungen der Erfindung, die Stromschalteinrichtung als DC-DC-Wandler oder sonstiger Gleichstromsteller auszubilden, der zum Einprägen und Regeln eines Konstantstroms in beziehungsweise durch das eine oder mehrere der Cluster oder Cluster-Netze entsprechend einem Vergleich eines Istwerts von dem Konstantstrom mit einer Sollwertvorgabe für den einzuprägenden Konstantstrom eingerichtet ist. Mit dem Einsatz eines DC-DC-Wandlers oder sonstigen Gleichstromstellers lässt sich der Vorteil erzielen, summiert beziehungsweise zusammengefasst eine größere Anzahl einzelner LED-Ströme effizient und mit verminderter Verlustleistung steuern oder regeln zu können. Zur Erfassung des LED-Strom-Istwerts lässt sich in einfacher Weise - analog zu einem Konstantstromschalter mit Transistor-Emitterwiderstand - ein einfacher ohmscher Widerstand einsetzen, über den der Iststrom einem Istwert-Eingang des DC-DC-Wandlers zugeführt wird.

Weitere Einzelheiten, Merkmale, Kombinationen und Wirkungen auf der Basis der Erfindung ergeben sich aus der nachfolgenden Beschreibung von beispielhaften Ausführungsformen der Erfindung sowie aus den Zeichnungen. Diese zeigen in:
- Fig. 1: eine Schnittdarstellung der Platine mit LED-Clusteranordnung
- Fig. 1a: eine entsprechende Schnittdarstellung einer abgewandelten Ausführung
- Fig. 2 a)-c): diverse Schaltungsvarianten der LED-Module innerhalb eines Clusters
- Fig. 3: eine schematische Schaltungsskizze eines erfindungsgemäßen LED-Leuchtsystems, und
- Fig. 4: eine erfindungsspezifisch ausgestaltete Steuerungseinheit mit angekoppelter Sensorik in schematischer Blockdarstellung.
- Fig. 5: eine Schaltung für eine alternative Konstantstromschalter-Pegelansteuerung
- Fig. 6: eine Schaltungsalternative für eine Strombereichsumschaltung, und
- Fig.7: eine Schaltungsalternative für die LED-Stromschalteinrichtung

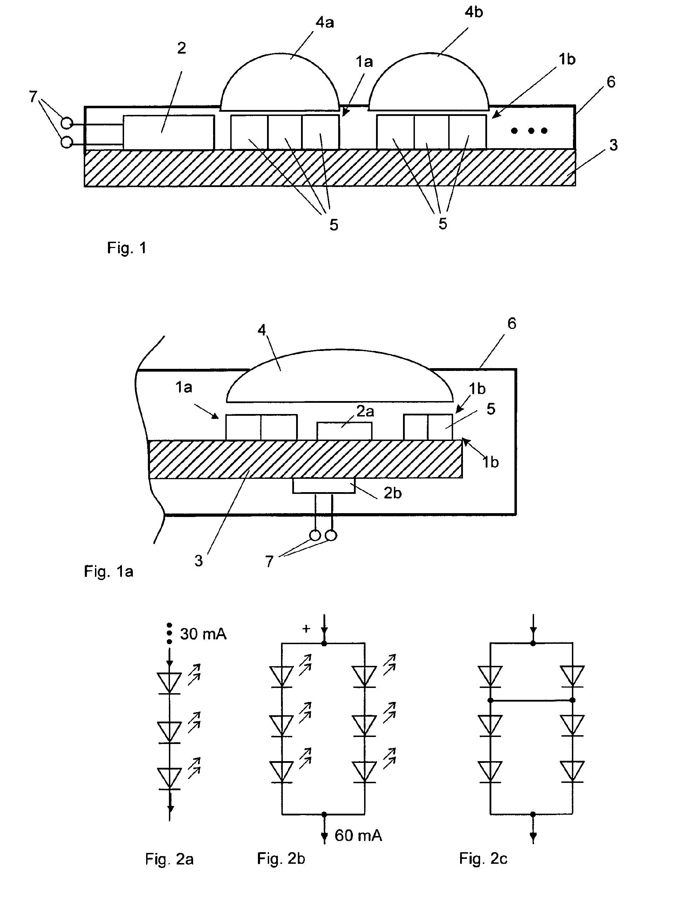

Gemäß Figur 1 sind mindestens ein erstes und ein zweites LED-Cluster 1a, 1 b sowie eine Elektronikeinheit 2 auf einer gemeinsamen Platine 3 aufgebracht. Jedes der beiden LED-Cluster 1a, 1b ist von einer jeweiligen Linse 4a, 4b zur optischen Ausrichtung und/oder Bündelung und/oder Fokussierung der Lichtemission abgedeckt. Zweckmäßig können auch mehrere LED-Module (5) eines Clusters (1 a,1 b) und/oder mehrere Cluster (1 a,1 b) von einer gemeinsamen Linse (4a,4b;4) abgedeckt sein.

Die Lichtemission wird von pn-Übergängen diskreter Einzel-LEDs erzeugt, wenn diese von Strom durchflossen sind. Die Einzel-LEDs sind entweder für sich allein oder zu mehreren in einer Gruppe zusammengefasst und verschaltet der wesentliche Bestandteil eines LED-Moduls 5. Gemäß Figur 1 sind jeweils drei LED-Module 5 mit minimalem Abstand untereinander zu einem der LED-Cluster 1a, 1b gruppiert. Die Anordnung aus Elektronikeinheit 2 und LED-Modulen 5 ist von einer gehäuseartigen Abdeckung 6 sowie den Linsen 4a, 4b umgeben. Die Abdeckung 6 ist mit der Platine 3 fest verbunden und von den Linsen 4a, 4b durchsetzt, so dass Lichtemission nach Außen dringen kann. Wie mit den drei Punkten in Figur 1 am rechten Rand der Platine 3 angedeutet, kann sich diese Struktur in gleicher oder gleichartiger Weise noch fortsetzen, das heißt, es können weitere LED-Cluster mit Linsenabdeckungen folgen, auch in abgewandelter Form. Um für die Elektronikeinheit 2 eine Versorgung mit Energie bzw. Strom und/oder eine Daten- oder Steuersignalkommunikation nach Außen zu gewährleisten, sind Verbindungselemente 7 (zum Beispiel Buchsenanschlüsse, Klemmen oder dergleichen) durch die Abdeckung 6 zumindest zu deren Außenseite geführt und extern frei zugänglich. Die Linsen 4a, 4b sind in Aussparungen in der Oberseite der Abdeckung 6 eingefasst und gehaltert und springen daraus hervor.

In Figur 1a ist die alternative Möglichkeit dargestellt, dass die Abdeckung 6 die Platine 3 vollständig umgibt, und die in Teile 2a, 2b untergliederte Elektronik zumindest teilweise auch auf der den LED-Clustern 4a, 4b abgewandten Rückseite der Platine 3 angebracht und befestigt sein kann. Die Platine 3 kann an einer (nicht gezeichneten Frontplatte) befestigt sein. Ein LED-Cluster umfasst mindestens zwei Einzel-LEDs oder zwei LED-Module 5. Mehrere LED-Cluster 1a, 1 b können gemäß Fig. 1a auch von einer gemeinsamen Linse 4 abgedeckt sein. Der erste Elektronikteil 2a ist auf der Oberseite und der zweite Elektronikteil 2b auf der Unter- bzw. Rückseite der Platine 3 angeordnet. Dadurch wird eine optimale Platzausnutzung erreicht. Die Abdeckung 6 ist sowohl um die Ober- als auch Unterseite sowie um die Schmalseiten der Platine 3 herumgeführt.

In den drei Teilen a), b) und c) der Figur 2 ist dargestellt, dass die Einzel-LEDs innerhalb eines LED-Moduls 5 oder, wenn letzteres nur ein einziges Einzel-LED aufweist, innerhalb eines LED-Clusters 4a, 4b miteinander in Reihe oder parallel geschaltet oder in kombinierten Reihen-/ Parallelschaltungen verbunden sein können. Bei der Serienschaltung gemäß Figur 2a) ist zum Beispiel ein Stromdurchfluss von 30 mA durch die drei hintereinander geschalteten pn-Übergänge bzw. Einzel-LEDs zweckmäßig. Dementsprechend ist der Parallelschaltung gemäß Figur 2b) aus jeweils drei in Reihe geschalteten Einzel-LEDs insgesamt eine Stromstärke von 60mA zur Verfügung zu stellen. Der Spannungsabfall beträgt dabei für jede Reihenschaltung gemäß Figur 2a) oder 2b) ca. 9 Volt. Es liegt im Rahmen der Erfindung, pro LED-Stromstrang oder -Stromkreis eine schaltbare bzw. steuerbare Stromquelle anzuordnen, um die Lichtemission ein- und ausschalten und die Stärke der Lichtemission per Pulsweitenmodulation oder dergleichen steuern zu können.

Gemäß Figur 3 werden die beiden Anschlusselemente 7 (wie im Zusammenhang mit Figur 1 angesprochen) von einer externen Spannungsquelle U_{E} aus gespeist. Diese kann sowohl eine Gleichspannungsquelle mit zum Beispiel 12 Volt als auch eine Wechselspannungsquelle aus dem allgemeinen 230-Volt-Netz sein. Die Anschlusselemente 7 stellen den Eingang für die Elektronikeinheit 2 dar. Einer der Anschlussquellen 7 ist unmittelbar eine Sicherung 8 zum Schutz der nachgeordneten Elektronik-Bauelemente nachgeschaltet. Alternativ oder zusätzlich kann, wenn die externe Spannungsquelle U_{E} Wechselspannung liefert, ein kapazitiver Vorwiderstand C_{V} unmittelbar nach der Anschlussklemme 7 angeordnet sein (gegebenenfalls in Reihe mit der Sicherung 8 geschaltet). Der kapazitive Vorwiderstand ist insbesondere zur Anpassung an kleine Leistungen geeignet.

Gemäß Figur 3 wird die von der externen Spannungsquelle gelieferte Eingangsspannung, die an einem Überspannungsschutzelement 9 (beispielsweise Varistor als Spannungsbegrenzer) abfällt, von einem Gleichrichter 10, beispielsweise einem Brückengleichrichter, abgegriffen. Dieser stellt an seinen beiden Ausgangsklemmen U_{B+}, U_{B-} die Betriebsspannung U_{B+}-U_{B-} für die nachgeordnete Elektronikanordnung zur Verfügung. Der Gleichrichter 10 in Einweg- oder Brückenschaltung wird bei Einspeisung von Wechselstrom benötigt. Bei Gleichstrombetrieb kann der Gleichrichter 10 optional zum Verpolungsschutz vorgesehen sein. Optional kann auch zwischen einerseits der positiven Betriebsspannungsklemme U_{B+} des Gleichrichters 10 und andererseits der jeweiligen Anodenseite entweder aller Reihen mit LED-Cluster 1, 1c oder nur einer Reihe LED-Cluster 1c ein Gleichspannungswandler (DC/DC-Wandler, beispielsweise Step-Up, -Step-Down- oder SEPIC-Wandler) DC/DC1 beziehungsweise DC/DC2 eingefügt sein. Bei letzterer Alternative ist die Anodenseite nur der letzten Reihe mit LED-Cluster 1c mit dem Ausgang des DC/DC-Wandlers DC/DC2 verbunden, während die Anodenseiten der andere Reihen LED-Cluster 1 alle direkt mit der positiven Betriebsspannungsklemme U_{B+} verbunden sind. Bei der ersten Alternative sind die Anodenseiten aller Reihen LED-Cluster 1, 1c direkt mit dem Ausgang des DC/DC-Wandlers DC/DC1 verbunden, der eingangangsseitig dann nur mit der positiven Betriebsspannungsklemme U_{B+} gekoppelt ist.

Von der allgemeinen Betriebsspannung U_{B+} - U_{B-} wird über einen Spannungsteiler mit dem Teiler-Vorwiderstand R_{V} und der diesem in Serie nachgeschalteten Zener-Diode 11 eine Hilfsspannung U_{H} erzeugt. Die Hilfsspannung wird parallel zur spannungsstabilisierenden Zener-Diode 11 mittels eines gepolten Elektrolyt-Kondensators 12 abgegriffen. Die Hilfsspannung lässt sich durch Betätigen eines kurzschließenden Verbindungsbügels 13 oder eines sonstigen Verbindungselements (zum Beispiel Jumper oder dergleichen) einem Ansteuereingang U_{S} zuführen. Dieser dient dem Durchschalten einer an sich bekannten Transistor-Konstantstromquelle 14. Dazu ist der Ansteuereingang U_{S} über einen Basiswiderstand R_{B} mit der Basis des Konstantstromquellen-Transistors 15 verbunden. Unmittelbar von der Transistor-Basis ist noch ein Nebenwiderstand R_{S} zur Masse abgezweigt. Dadurch wird die Basisemitterspannung stabil gehalten. Vom Emitteranschluss des Transistors 15 führt ein Emitter-Widerstand R_{E}, welcher die Stärke des Konstantstroms festlegt, auf Masse. Der Konstantstrom ergibt sich aus den Quotienten der Emitterklemmenspannung durch den Emitterwiderstand R_{E}. Am Kollektoranschluss der Konstantstromquelle 14 liegen mindestens eine oder zueinander parallel zwei oder mehr Reihenschaltungen mit LED-Cluster 1 an. Der Konstantstrom ist so bemessen, dass die einzelnen pn-Übergänge bzw. Einzel-LEDs jedes LED-Clusters 1 von einem Strom etwa mit der Stärke 5 bis 50 mA durchflossen werden. Dazu sind die LED-Cluster bzw. deren Einzel-LEDs mit ihrer jeweiligen Anodenseite parallel zum Teiler-Vorwiderstand R_{V} an die Plus-Ausgangsklemme U_{B+} angelegt. Nach dem gleichen *obigen* Prinzip ist noch eine weitere Transistor-Konstantstromquelle 14a mit gleichartiger Beschaltung an eine Serie weiterer LED-Cluster 1c angelegt. Während von der ersten Konstantstromquelle 14 eine Parallelschaltung aus zwei Reihen LED-Cluster 1 gespeist wird, versorgt die zweite Konstantstromquelle 14a gemäß gezeichnetem Ausführungsbeispiel lediglich eine einzige Reihe mit LED-Cluster 1 c. Die jeweilige LED-Clusterreihe 1, 1c umfasst mindestens ein Cluster und kann beispielsweise bis zu 30 LED-Cluster oder auch mehr umfassen.

Die Transistor-Konstantstromquelle 14 läßt sich insofern als Stromregelkreis auffassen, als mittels des Emitter-Widerstands R_{E} eine Rückkopplung des Strom-Istwerts zur Basis-Eingangsspannung des Konstantstromquellen-Transistors 15 stattfindet.

Gemäß Figur 3 ist bei einer Konstantstromquelle 14a der dortige Emitterwiderstand R_{E} mit einer Strombereichsumschaltung gekoppelt. Diese kann gemäß gezeichnetem Ausführungsbeispiel mit einem ansteuerbaren Schaltelement 16, beispielsweise einem Transistorschalter mit Kollektorwiderstand R_{C} realisiert sein. Beim Schaltelement bzw. Transistorschalter 16 ist ein Bereichswahl-Ansteuereingang U_{BW} vorgesehen (z.B. an die Basis des Schalttransistors gelegt), bei dessen Betätigung mit einer Eingangsspannung das Schaltelement bzw. der Transistorschalter 16 den Kollektorwiderstand R_{C} auf Masse durchschaltet. Dadurch wird ein gewisser Anteil des Stromflusses aus dem Emitter der Transitor-Konstantstromquelle 14a gegenüber dem Emitterwiderstand R_{E} abgezweigt. Dementsprechend fließt weniger Strom durch den Emitterwiderstand R_{E}, und es entsteht aufgrund der über U_{BW} angesteuerten Parallelschaltung von Emitterwiderstand R_{E} und Kollektorwiderstand R_{C} ein verminderter Gesamtwiderstand gegenüber Masse.

Gemäß Figur 3 umfasst die Elektronikeinheit 1 eine Steuerung 17, welche von der Hilfsspannung U_{H} aus mit Strom versorgt wird. Die Steuerung 17 kann mit kostengünstig erhältlichen Mikroprozessoren bzw. Einchip-Mikrocomputer realisiert sein. Dadurch lässt sich softwaremäßig beispielsweise ein Pulsweiten-Modul PWM realisieren, mittels welcher die Ansteuereingänge der Konstantstromquellen 14, 14a betätigt werden können, wenn der Verbindungsbügel 13 (manuell) entfernt oder ein sonstiges Verbindungselement beispielsweise steuerelektronisch unterbrochen wird. In ähnlicher Weise kann über den Mikroprozessor und dessen Programmspeicher eine Softwareroutine zur Betätigung bzw. Auswahl des Strombereichs über den entsprechenden Ansteuereingang U_{BW} realisiert sein. Auf dem Markt erhältliche Einchipmikrocomputer sind vielfach noch mit Funktionskomponenten wie Multiplexer-Analogeingänge MUX mit nachgeschaltetem Analog-Digitalwandler ADW ausgestattet. Darüber lassen sich mehrere Ausgänge aus einer Sensorik erfassen und verarbeiten.

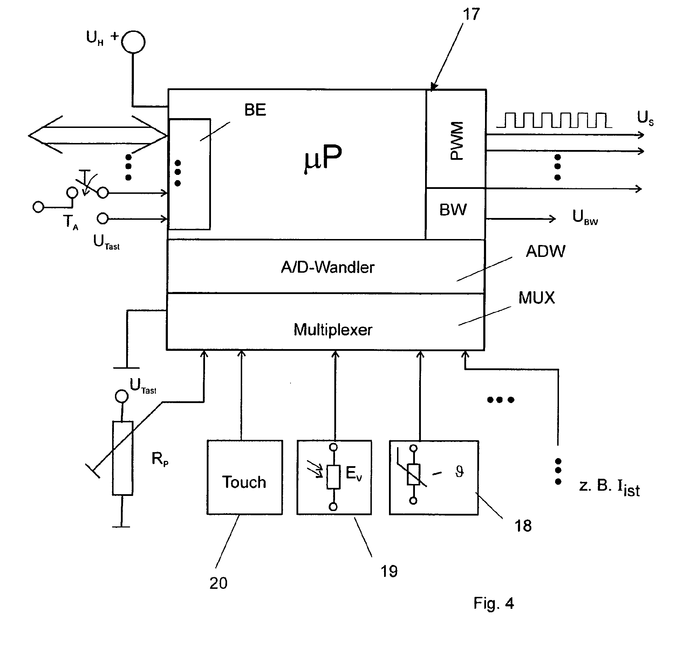

Letzteres ist näher mittels Figur 4 veranschaulicht, wo die Funktionsmodule der Steuerung 17 und die angeschlossene Sensorik gezeigt sind. Danach ist die Steuerung 17 mit einem Mikroprozessor µP realisiert, der in Verbindung mit seinem Programmspeicher anwendungsspezifische Softwaremodule ausführt, insbesondere zur Pulsweitenmodulation PWM oder zur Strombereichsauswahl BW. Als Ausgangsergebnisse werden entsprechende Binärsignale an die Ansteuereingänge U_{S} der Konstantstromquellen 14, 14a und an den Bereichswahl-Ansteuereingang U_{BW} des Schaltelements 16 geleitet. Die Muster, mit welchen die Binärsignale die Ansteuereingänge Us, U_{BW} ausgegeben werden, können per Mikroprozessorprogramm vom Zustand der LED-Cluster oder von manuellen Eingaben des Benutzers abhängig gemacht werden. Dies kann über den bereits angesprochenen Multiplexer MUX mit nachgeschalteten A/D-Wandler ADW bewerkstelligt werden. Beide Bausteine können in einem Einchip-Mikrocomputer mit dem genannten Mikroprozessor µP integriert sein.

An einem der vom Multiplexer erfassten Analogeingänge ist gemäß Figur 4 ein temperaturabhängiger Widerstand 18 angelegt. Über diesen lässt sich die Umgebungstemperatur an der Elektronik und an den LEDs beispielsweise auf Überschreiten einer bestimmten Schwelle von z.B. 80° Celsius überwachen. Wird diese Temperaturschwelle überschritten, kann mittels des Mikroprozessorprogramms für die Pulsweitenmodulation PWM die Leistungsaufnahme der betroffenen LED-Cluster stufenweise reduziert werden. Temperaturabhängige Widerstände sind als Thermistoren mit positivem Temperaturkoeffizienten (PTC) und negativem Temperaturkoeffizienten (NTC) an sich bekannt. Alternativ oder zusätzlich kann ein Halbleiter-Temperatursensor zum Einsatz kommen.

Gemäß Figur 4 ist eine weitere analoge Eingangsleitung der Steuerung 17 mit einem Fotowiderstand 19, der seinen Widerstandswert in Abhängigkeit von einer Beleuchtungsstärke E_{V} ändert, verbunden. Damit lässt sich in Verbindung mit entsprechender Mikroprozessorsoftware und Ansteuerung der Konstantstromschalter 14, 14a eine lichtabhängige Helligkeitsregelung implementieren, um z.B. eine Dämmerungsschaltung, eine Regelung auf konstante Lichtemission oder eine Tageslichtregelung zu realisieren. Alternativ zum Fotowiderstand 19 lassen sich auch an sich bekannte Lichtsensoren einsetzen, welche abhängig vom Umgebungslicht eine analoge Spannung für den Multiplexer MUX mit nachgeschaltetem A/D-Wandler ADW zur Verfügung stellen.

Gemäß Figur 4 lässt sich an einen Analog-Eingang der Steuerung 17 auch ein Berührungssensor 20 anschließen, welcher für eine so genannte Berührungssteuerung genutzt werden kann (Touch-Sensor). Ein weiterer Analog-Eingang lässt sich im Zusammenhang mit einem Potentiometer R_{P} zur manuellen Erzeugung eines externen Steuerungssignals nutzen. Eine weitere Möglichkeit der Steuerung besteht über Binäreingänge BE des Mikroprozessors, von denen einer beispielsweise mit einem Taster TA gekoppelt ist. Ebenso können auf der Platine kapazitive, magnetische und/oder optische Sensoren integriert sein. Des weiteren lässt sich mit wenigstens einem Drucksensor - druckempfindlich insbesondere gegenüber manueller Betätigung - ein Schaltkreis ausbilden, der vorzugsweise am Gehäuse und/oder für externe Bedienunung zugänglich angeordnet ist.

Eine weitere Möglichkeit ergibt sich gemäß Figur 3 dadurch, dass ein Tastschalter 21 zur Verbindung mit einem der Anschlusselemente 7 für eine externe Spannungsversorgung U_{E} betätigt wird. Eine nachgeordnete Gleichrichterdiode D_{G} sorgt dafür, dass die Tasterspannung U_{Tast} nicht negativ wird. Zwischen zwei Spannungsteiler-Widerstände Rₜ₁, Rₜ₂ wird die Tasterspannung U_{Tast} für einen der oben angesprochenen Binäreingänge der Steuerung 17 abgegriffen. Ein Parallelkondensator C_{P} bewirkt eine Signalglättung.

Ferner kann gemäß Fig. 3 von einem derart beschalteten und geschlossenen Tastschalter 21 mit direkter Anbindung an die Wechsel-Eingangsspannung U_{E} eine pulsierende Tasterspannung U_{TAST} als Wechselspannungs-Synchronisierungssignal oder Triggersignal für Steuerungsaufgaben verwendet und dazu beispielsweise dem Mikroprozessor µP zugeführt werden. Letzterer erhält dadurch Informationen über aktuell auftretende Nulldurgänge oder Halbwellenscheitel beziehungsweise -spitzen der der Netzspannung AC. Der Mikroprozessor µP oder eine sonstige Steurung kann dann zweckmäßig so eingerichtet sein, im Sinne der Verhinderung eines schädlich großen Einschaltstromes beispielsweise immer bei einem Netzspannungs-Nulldurchgang die Konstantstromquelle 14, 14a einzuschalten.

Um durch die LEDs oder LED-Module (5) einen möglichst konstanten und präzisen Stromfluss zu erhalten, besteht eine optionale Ausbildung darin, den Emitter- beziehungsweise LED-Strom I_{E} als Istwert durch den Analog/Digitalwandler ADW in der Steuerung 17 zu erfassen. Über ein in der Steuerung 17 programm- und/oder schaltungstechnisch entsprechend modifiziertes PWM-Ausgangssignal für den Ansteuereingang U_{S} lässt sich ein Konstantstromregelung herbeiführen.

Gemäß Fig. 5 ist das beispielsweise ein PWM-Signal führende Ansteuersignal U_{S} über einen Tiefpasses 22 zur Signalglättung, beispielsweise RC-Tiefpass, mit dem nichtinvertierenden Eingang eines Operationsverstärkers OPV verbunden. Über dessen invertierenden Eingang wird die am Emitterwiderstand R_{E} abfallende Emitterklemmenspannung des Konstantstromquellen-Transistors 15 mit dem Ansteuersignal U_{S} verglichen. Abhängig von der resultierenden Abweichung wird der Transistor 15 und beispielsweise die Konstantstromquelle 14a mit der Strombereichsumschaltung angesteuert. Ein parallel zum nichtinvertierenden Eingang des Operationsverstärkers OPV auf Masse geschalteter Anpassungswiderstand R_{PA} dient der Erzeugung eines angepassten Ansteuersignals U_{S}'.

Gemäß Fig. 6 ist die Strombereichsumschaltung mit dem Transistor-Schaltelement 16 und dessen Kollektorwiderstand R_{C} an den Eingang des Konstantstromquellen-Transistors 15 angekoppelt, der wiederum mit dem Emitterwiderstand R_{E} betrieben ist. Die Basis des Transistor-Schaltelements 16 bildet wiederum den Bereichswahl-Ansteuereingang U_{BW}. Ist letzterer nicht betätigt, kann der nachgeschaltete Konstantstromquellen-Transistor 15 im typischen Transistorschalter-Betriebsverfahren btätigt werden. Dabei erfolgt die an sich bekannte Übersteuerung des Konstantstromquellen-Transistors 15, so dass dieser und damit die einen oder mehreren zugeordneten LEDs beziehungsweise LED-Module 5 oder LED-Cluster 1, 1a, 1b, 1c von einem maximalen Stromfluss durchsetzt sind. Wird jedoch der Bereichswahl-Ansteuereingang U_{BW} des Transistor-Schaltelements 16 betätigt, erfolgt für den Konstantstromquellen-Transistor 15 eine Umstellung auf Kleinsignalbetrieb, wobei der Stromfluss durch den Konstantstromquellen-Transistor 15 und die einen oder mehreren zugeordneten LEDs beziehungsweise LED-Module 5 oder LED-Cluster 1, 1a, 1 b, 1c sich vermindert (AB - beziehungsweise Verstärker-Betriebsverfahren). Denn dem auf Masse geschalteten Nebenwiderstand R_{S} wird beim entsprechenden Durchschalten des Transistor-Schaltelements 16 der damit verbundene Kollektorwiderstand R_{C} gleichsam parallel auf Masse geschaltet. Alternativ oder zusätzlich könnte eine Änderung des Stromflusses aus dem Konstantstromquellen-Transistor 15 auch durch eine leicht änderbare Ausführung des Nebenwiderstands R_{S} mit einem Potentiometer erfolgen.

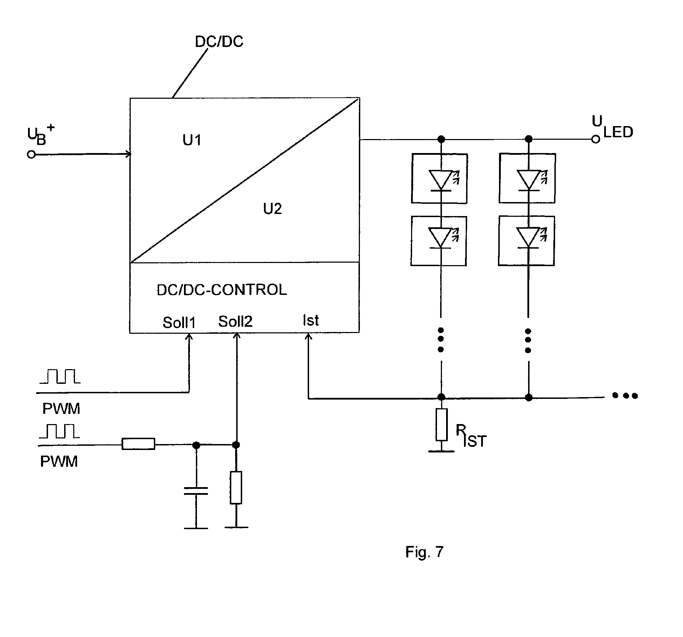

Gemäß Fig. 7 ist der Konstantstromquellen-Transistor 15 durch einen DC-DC-Wandler DC/DC ersetzt, der für das oder die LED-Module (5) oder LED-Cluster 1 gleichsam als Konstantstromsteller beziehungsweise -quelle 14 arbeitet und die in die Gesamt-Anordnung eingehende Betriebsspannung U_{B} in eine geeignete LED-Betriebsspannung U_{LED} umsetzt. Ähnlich wie bei dem in Fig. 3 gezeigten Konstantstromquellen-Transistors 15 mit Emitterwiderstand wird nach Fig. 7 mit dem DC-DC-Wandler DC/DC eine LED-Stromregelung bewirkt, wozu über einen von einer LED auf Masse gelegten Widerstand R_{IST} eine Istwert-Rückführung für den tatsächlichen LED-Strom in einen Steuerungsteil DC/DC-CONTROL des DC-DC-Wandlers DC/DC stattfindet. Darin wird der Istwert über einen Soll-/Istwertvergleich mit einer Sollwert-Vorgabe SOLL1, SOLL2 verglichen und die LED-Betriebsspannung U_{LED} entsprechend nachgestellt wird. Die Sollwertvorgabe kann einen Binäreingang SOLL1 beispielsweise für ein vom Mikroprozessor µP gemäß Fig.3 generiertes Pulsweitenmodulationssignal PWM und/oder einen Analogeingang SOLL2 umfassen, welchem beispielsweise eine mittels eines RC-Glieds oder sonstigen Filternetzwerkes geglättete Version des Pulsweitenmodulationssignals PWM zugeführt wird.

### Bezugszeichenliste

- 1, 1a, 1b, 1c: LED-Cluster
- 2: Elektronikeinheit
- 2a, 2b: erster, zweiter Elektronikteil
- 3: Platine
- 4, 4a, 4b: Linse
- 5: LED-Modul
- 6: Abdeckung
- 7: Verbindungs-/Anschlusselemente
- D_{E}: externe Spannungsquelle
- 8: Sicherung
- Cv: kapazitiver Vorwiderstand
- 9: Überspannungsschutzelement
- 10: Gleichrichter
- U_{B+},U_{B-}: Ausgangsklemmen
- U_{B+}-U_{B-}: Betriebsspannung
- DC/DC1, DC/DC2: DC/DC-Wandler
- R_{V}: Teiler-Vorwiderstand
- 11: Zener-Diode
- U_{H}: Hilfsspannung
- 12: Elektrolytkondensator
- 13: Verbindungsbügel
- U_{S}: Ansteuereingang
- 14, 14a: Konstantstromquelle
- 15: Transistor
- R_{B}: Basiswiderstand
- R_{S}: Nebenwiderstand
- R_{E}: Emitterwiderstand
- 16: Schaltelement
- R_{C}: Kollektor-Widerstand
- U_{BW}: Bereichswahl-Ansteuereingang
- 17: Steuerung
- µP: Mikroprozessor
- MUX: Multiplexer
- ADW: Analog-/Digitalwandler
- BW: Strombereichswahl
- 18: temperaturabhängiger Widerstand
- 19: Fotowiderstand
- 20: Berührungssensor
- R_{P}: Potentiometer
- BE: Binäreingänge
- TA: Direkt-Taster
- 21: Tastschalter
- D_{G}: Gleichrichterdiode
- U_{Tast}: Tasterspannung
- Rₜ₁, Rₜ₂: Spannungsteilerwiderstand
- C_{P}: Parallel kondensator
- I_{E}: Stromfluss durch LED oder LED-Modul
- 22: Tiefpass
- OPV: Operationsverstärker
- R_{PA}: Anpassungswiderstand
- Us': angepasstes Ansteuersignal
- DC/DC: DC-DC-Wandler
- U_{LED}: LED-Betriebsspannung
- DC/DC-CONTROI: Steuerungsteil des DC-DC-Wandlers
- PWM: Pulsweitenmodulationssignal
- SOLL1: Binäreingang
- SOLL2: Analogeingang

## Patentansprüche

1. Leuchtanordnung für Allgemein-Leuchten, einschliesslich Möbel- oder Vitrinenleuchten, mit einer Platine (3), auf der sich ein oder mehrere Cluster (1,1a,1b) jeweils mit mehreren LED-Modulen (5) oder ein oder mehrere Netze derartiger Cluster befinden, wobei die LED-Module (5) mindestens ein diskretes Einzel-LED mit zwei Anschlüssen oder einen LED-Chip mit mehreren LEDs aufweisen,
wobei auf der Platine (3) eine oder mehrere Stromschalteinrichtungen angeordnet sind, die jeweils mit dem einen oder mehreren der Cluster (1,1a,1b) oder Cluster-Netzen zu deren Stromversorgung verbunden sind und einen Ansteuereingang (Uₛ) aufweisen, worüber die eine oder mehreren Stromschalteinrichtungen ein- oder ausschaltbar sind,
wobei die Stromschalteinrichtung eine Ausbildung oder Einrichtung als Konstantstromquelle (14,14a) umfasst, die zum Einprägen eines Konstantstroms bei betätigtem Ansteuereingang (Uₛ) in das eine oder mehrere der Cluster (1,1a,1b) oder Cluster-Netze derart bemessen und/oder ausgelegt ist, dass jedes diskrete Einzel-LED des jeweiligen LED-Moduls (5) mit einer Stromstärke zwischen 5 und 50 mA durchflossen ist,
**gekennzeichnet durch** eine auf der Platine (3) angeordnete Steuerung (17) Zur Steuerung der eine oder mehrere Stromschalteinrichtungen, wobei die Steuerung (17) eingangsseitig mit einer pulsierenden Tasterspannung (U_{Tast}) gekoppelt ist, das von einer wechsel eingangsspannung (U_{E}) der Leuchtanordnung abgeleitet ist.

2. Leuchtanordnung nach Anspruch 1, **gekennzeichnet durch** einen auf der Platine (3) angeordneten Gleichrichter (10), der eingangsseitig über ein oder mehrere auf der Platine (3) angeordnete Anschlusselemente (7) mit einer externen Spannungsquelle (U_{E}) koppelbar und ausgangsseitig mit mehreren Reihenschaltungen (1, 1, 1, 14; 1c, 1c, 1c, 14a) parallel verbunden ist, die Cluster (1,1c) der Leuchtanordnung bilden, wobei der Gleichrichter (10) mit zumindest einem der Cluster (1) direkt verbunden ist und mit einem der Cluster (1c) über einen Gleichspannungswandler (DC/DC2) verbunden ist.

3. Leuchtanordnung nach Anspruch 1 oder 2, **dadurch gekennzeichnet, dass** die Stromschalteinrichtung eine Ausbildung oder Einrichtung als Regelkreis mit einem Regler umfasst, der eingangsseitig mit dem Ansteuereingang (US) und, zu einem Soll-/Istwertvergleich damit, mit einer Signalquelle verbunden ist, deren Ausgangsgröße dem Stromfluss durch ein diskretes Einzel-LED des jeweiligen LED-Moduls (5) entspricht, und der Regler mit oder in der Stromschalteinrichtung baulich integriert oder ausgangsseitig mit der Stromschalteinrichtung zu deren Ansteuerung verbunden ist.

4. Leuchtanordnung nach einem der Ansprüche 1 bis 3, **dadurch gekennzeichnet, dass** die Konstantstromquelle (14,14a) mit einer Transistor-Emitterschaltung realisiert ist, deren Emitterstrom dem Stromfluss durch die Einzel-LEDs entspricht oder diesen bestimmt oder beeinflusst und über einen Emitterwiderstand (R_{E}) einstellbar ist.

5. Leuchtanordnung nach einem der vorangehenden Ansprüche, **gekennzeichnet durch** mit der oder den Stromschalteinrichtungen (14,14a) gekoppelte und mit einem Ansteuereingang (UBW) versehene Mittel zur Einstellung der Stärke des **durch** die Stromschalteinrichtung(en) (14,14a) fließenden Stromes.

6. Leuchtanordnung nach einem der Ansprüche 4 oder 5, **dadurch gekennzeichnet, dass** die Stromstärke-Einstellungsmittel mit einem Schaltelement (16) realisiert und/oder gekoppelt sind, mittels welchem dem Emitterwiderstand (R_{E}) und/oder einem nach Masse geschalteten Nebenwiderstand (Rₛ) oder sonstgen Widerstand am Eingang der Transistor-Emitterschaltung ein Neben- beziehungsweise Shuntwiderstand (R_{c}) zur Stromabzweigung zuschaltbar ist.

7. Leuchtanordnung nach einem der vorangehenden Ansprüche, **dadurch gekennzeichnet, dass** je einem Cluster (1) und/oder einer oder mehreren Reihen- oder Parallelschaltungen und/oder kombinierten Reihen- und Parallelschaltungen aus jeweils mehreren der Cluster (1) oder Cluster-Netze je eine Stromschalteinrichtung (14,14a) zugeordnet ist.

8. Leuchtanordnung nach einem der vorangehenden Ansprüche, **gekennzeichnet durch** eine manuell betätigbare und lös- beziehungsweise unterbrechbare Verbindungseinrichtung (13), mittels welcher der Ansteuereingang (U') an unterschiedliche Sensor-, Steuer- oder sonstige Funktionskomponenten (18,19,20;17) koppelbar ist.

9. Leuchtanordnung nach einem der vorangehenden Ansprüche, **gekennzeichnet durch** eine auf der Platine (3) angeordnete Steuerung (17) und/oder Sensorik (18,19,20), wovon beziehungsweise womit der Ansteuereingang (U') der jeweiligen Stromschalteinrichtung (14;14a) manuell lösbar (13) verbunden oder verbindbar ist.

10. Leuchtanordnung nach Anspruch 9, **dadurch gekennzeichnet, dass** die Steuerung (17) programm- und/oder schaltungstechnisch dazu eingerichtet ist, dem Ansteuereingang (U') der Stromschalteinrichtung (14,14a) pulsweitenmodulierte Signale zuzuführen.

11. Leuchtanordnung nach Anspruch 9 und einem der Ansprüche 5 und 6, **dadurch gekennzeichnet, dass** die Steuerung (17) ausgangsseitig mit dem Ansteuereingang (U_{BW}) der Stromstärke-Einstellmittel (16,R_{c}) verbunden und programm-und/oder schaltungstechnisch dazu eingerichtet ist, eingegebene und/oder gespeicherte LED- und/oder Helligkeits-Parameter in ein entsprechendes Ansteuersignal umzusetzen.

12. Leuchtanordnung nach einem der Ansprüche 9 - 11, **dadurch gekennzeichnet, dass** die Steuerung (17) mit einer oder mehreren analogen Eingangschnittstellen (ADW,ADW1,ADW2) zur Erfassung des durch eine oder mehrere LEDs oder LED-Module (5) erfolgenden Stromflusses (IE) versehen und programm- und/oder schaltungstechnisch dazu eingerichtet ist, abhängig von dem erfassten Stromfluss (I_{E}) den Ansteuereingang (Uₛ) zum Einprägen eines Konstantstroms für das oder die LEDs oder LED-Module (5) zu betätigen.

13. Leuchtanordnung nach einem der vorangehenden Ansprüche, mit einer über ein Anschlusselement (7) von extern versorgten oder versorgbaren Gleichspannungsquelle, **dadurch gekennzeichnet, dass** vom Ausgang der Gleichspannungsquelle eine Hilfsspannungsquelle (11,12) mit gegenüber der Gleichspannungsquelle heruntergesetzter Ausgangsspannung (Undₕ) gespeist und mit dem Ansteuereingang (Undₛ) der Stromschalteinrichtung (14,14a) zu deren Betätigung gekoppelt oder lösbar und vorzugsweise manuell koppelbar ist.

14. Leuchtanordnung nach Ansprüche 8 und 13, **dadurch gekennzeichnet, dass** die Steuerung (17) zu ihrer Strom- beziehungsweise Spannungsversorgung mit der Hilfsspannungsquelle (11,12) gekoppelt oder koppelbar ist.

15. Leuchtanordnung nach einem der vorangehenden Ansprüche, **dadurch gekennzeichnet, dass** die Stromschalteinrichtung eine Ausbildung oder Einrichtung als DC-DC-Wandler oder sonstiger Gleichstromsteller umfasst, der zum Einprägen und Regeln eines Konstantstroms in beziehungsweise durch das eine oder mehrere der Cluster (1,1a,1b) oder Cluster-Netze entsprechend einem Vergleich eines Istwerts von dem Konstantstrom mit einer Sollwertvorgabe für den einzuprägenden Konstantstrom ausgebildet ist.

## Claims

1. Light arrangement for general lights, including furniture or cabinet lights having a board (3) on which one or several clusters (1, 1a, 1b) each having several LED modules (5) or one or several networks of such clusters are located, wherein the LED modules (5) comprise at least one discrete single LED having two terminals or one LED chip having several LEDs,
wherein on the board (3) one or several current switching means are arranged each connected to the one or the several of the clusters (1, 1a, 1b) or cluster networks for their current supply and comprising one control input (Uₛ) via which the one or the several current switching means may be switched on or off,
wherein the current switching means includes an implementation or means as a constant current source (14, 14a) which is scaled and/or implemented for impressing a constant current, when the control input (Uₛ) is operated, into the one or several of the clusters (1, 1a, 1b) or cluster networks such that through each discrete single LED of the respective LED module (5) a current strength of between 5 and 50 mA flows,
**characterized by** a control (17) arranged on the board (3) for controlling the one or the several current switching means, wherein on the input side the control (17) is coupled to a pulsating feeler voltage (U_{Tast}) derived from an alternating input voltage (U_{E}) of the light arrangement.

2. Light arrangement according to claim 1, **characterized by** a rectifier (10) arranged on the board (3) wherein the rectifier may on the input side be coupled to an external voltage source (U_{E}) via one or several terminal elements (7) arranged on the board (3) and is on the output side connected in parallel to several series connections (1, 1, 1, 14; 1c, 1c, 1c, 14a) which form clusters (1, 1c) of the light arrangement, wherein the rectifier (10) is directly connected to at least one of the clusters (1) and is connected to one of the clusters (1c) via a direct voltage converter (DC/DC2).

3. Light arrangement according to claim 1 or 2, **characterized in that** the current switching means includes an implementation or means being a control loop with a regulator which is on the input side connected to the control input (US) and is for a set/actual value comparison connected to a signal source whose output variable corresponds to the current flow through a discrete single LED of the respective LED module (5) and wherein the regulator is structurally integrated to or into the current switching means or is on the output side connected to the current switching means for controlling the same.

4. Light arrangement according to one of claims 1 to 3, **characterized in that** the constant current source (14, 14a) is realized with a transistor/emitter circuit whose emitter current corresponds to the current flow through the single LEDs or determines or influences the same and may be set via an emitter resistance (R_{E}).

5. Light arrangement according to one of the preceding claims, **characterized by** means for setting the strength of the current flowing through the current switching means (14, 14a) and coupled to the one or several current switching means (14, 14a) and provided with a control input (UBW).

6. Light arrangement according to one of claims 4 or 5, **characterized in that** the current strength setting means are realized with and/or coupled to a switching element (16) by means of which a shunt resistor (R_{c}) for current branching may be switched to the emitter resistance (R_{E}) and/or a shunt connected to ground (Rₛ) or any other resistance at the input of the transistor/emitter circuit.

7. Light arrangement according to one of the preceding claims, **characterized in that** with one cluster (1) each and/or one or several series or parallel circuits and/or combined series and parallel circuits from several of the clusters (1) or cluster networks one current switching means (14, 14a) each is associated.

8. Light arrangement according to one of the preceding claims, **characterized by** a manually operable and releasable or interruptible connecting means (13) by means of which the control input (U') may be coupled to different sensor, control or other functional components (18, 19, 20; 17).

9. Light arrangement according to one of the preceding claims, **characterized by** a control (17) and/or sensor technology (18, 19, 20) arranged on the board (3), by which or using which the control input (U') of the respective current switching means (14; 14a) is connected or connectable in a manually detachable way (13).

10. Light arrangement according to claim 9, **characterized in that** the control (17) is implemented with respect to program and/or circuit technology to supply pulse-width modulated signals to the control input (U') of the current switching means (14, 14a).

11. Light arrangement according to claim 9 and one of claims 5 and 6, **characterized in that** the control (17) is on its output side connected to the control input (U_{BW}) of the current strength setting means (16, R_{c}) and is implemented with respect to program and/or circuit technology to transfer input and/or stored LED and/or lightness parameters into a corresponding control signal.

12. Light arrangement according to one of claims 9 to 11, **characterized in that** the control (17) is provided with one or several analogue input interfaces (ADW, ADW1, ADW2) for detecting the currents flow (IE) passing through one or several LEDs or LED modules (5) and is implemented with respect to program and/or circuit technology to operate the control input (Uₛ) for impressing a constant current for the one or several LEDs or LED modules (5) depending on the detected current flow (I_{E}).

13. Light arrangement according to one of the preceding claims, comprising a direct voltage source externally supplied or suppliable via a terminal element (7) **characterized in that** by the output of the direct voltage source an auxiliary voltage source (11, 12) is fed by an output voltage (Undₕ) reduced with respect to the direct voltage source and is coupled or detachably and preferably manually coupleable to the control input (Undₛ) of the current switching means (14, 14a) for operating the same.

14. Light arrangement according to claims 8 and 13, **characterized in that** the control (17) is coupled or coupleable to the auxiliary voltage source (11, 12) for its current or voltage supply.

15. Light arrangement according to one of the preceding claims, **characterized in that** the current switching means includes an implementation or means as a DC/DC converter or any other direct current inverter which is implemented for impressing and regulating a constant current in or through the one or several of the clusters (1, 1a, 1b) or cluster networks according to a comparison of an actual value of the constant current to a set point setting for the constant current to be impressed.

## Revendications

1. Agencement de lampe pour lampes générales, y compris les lampes pour meuble ou vitrine, avec une plaquette (3) sur laquelle se trouvent une ou plusieurs grappes (1, 1a, 1b) dotées, chacune, de plusieurs modules DEL (5) ou d'un ou de plusieurs réseaux de telles grappes, les modules DEL (5) présentant au moins une DEL individuelle à deux connexions ou une puce à DEL à plusieurs DEL,
sur la plaquette (3) étant disposés un ou plusieurs moyens de commutation de courant qui sont reliés à l'une ou plusieurs des grappes (1, 1a, 1b) ou des réseaux de grappes pour leur alimentation en courant et présentant une entrée d'activation (U_{S}) par laquelle peuvent être enclenchés ou déclenches les un ou plusieurs moyens de commutation de courant,
le moyen de commutation de courant comportant une réalisation ou un moyen comme source de courant continu (14, 14a) qui est dimensionné et/ou réalisé pour imprimer un courant continu, lorsque l'entrée d'activation (U_{S}) est activée, dans les une ou plusieurs des grappes (1, 1a, 1b) ou réseaux de grappes de sorte que chaque DEL individuelle discrète du module de DEL respectif (5) soit parcourue d'une intensité de courant comprise entre 5 et 50 mA,
**caractérisé par** une commande (17) disposée sur la plaquette (3) destinée à commander les un ou plusieurs moyens de commutation de courant, la commande (17) étant couplée à une tension de sonde pulsée (U_{Tast}) qui est dérivée d'une tension d'entrée alternative (U_{E}) de l'agencement de lampe.

2. Agencement de lampe selon la revendication 1, **caractérisé par** un redresseur (10) disposé sur la plaque (3), qui, du côté de l'entrée, peut être couplé, par l'intermédiaire d'un ou de plusieurs éléments de connexion (7) disposés sur la plaquette (3), à une source de tension externe (U_{E}) et qui est relié, du côté de la sortie, en parallèle à plusieurs circuits en série (1, 1, 1, 14; 1c, 1c, 1c, 14a) formant des grappes (1, 1c) de l'agencement de lampe, le redresseur (10) étant relié directement à au moins l'une des grappes (1) et relié à l'une des grappes (1c) par l'intermédiaire d'un transformateur de tension continue (DC/DC2).

3. Agencement de lampe selon la revendication 1 ou 2, **caractérisé par le fait que** le moyen de commutation de courant comporte une réalisation ou un moyen comme circuit de régulation avec un régulateur, qui est relié, du côté de l'entrée, à l'entrée d'activation (US) et, pour une comparaison consigne/réel par cette dernière, à une source de signal dont la grandeur de sortie correspond au flux du courant à travers une DEL individuelle discrète du module DEL respectif (5), et le régulateur est intégré par construction avec ou dans le moyen de commutation de courant ou relié, du côté de la sortie, avec le moyen de commutation de courant pour son activation.

4. Agencement de lampe selon l'une des revendications 1 à 3, **caractérisé par le fait que** la source de courant continu (14, 14a) est réalisée avec un circuit émetteur à transistor dont le courant émetteur correspond au flux de courant dans les DEL individuelles ou détermine ou influence ce dernier et peut être réglé par l'intermédiaire d'une résistance d'émetteur (R_{E}).

5. Agencement de lampe selon l'une des revendications précédentes, **caractérisé par** des moyens de réglage de l'intensité du courant circulant dans le ou les moyens de commutation de courant (14, 14a) couplés au ou aux moyens de commutation de courant (14, 14a) et pourvus d'une entrée d'activation (UBW).

6. Agencement de lampe selon l'une des revendications 4 ou 5, **caractérisé par le fait que** les moyens de réglage de l'intensité du courant sont réalisés par et/ou couplés à un élément de commutation (16) à l'aide duquel peut être connectée à la résistance d'émetteur (R_{E}) et/ou à une résistance auxiliaire (R_{S}) connectée selon la masse ou à une autre résistance à l'entrée du circuit d'émetteur à transistor une résistance auxiliaire ou de shunt (R_{C}) pour la dérivation du courant.

7. Agencement de lampe selon l'une des revendications précédentes, **caractérisé par le fait qu'**à chaque grappe (1) et/ou à un ou plusieurs circuits en série ou parallèles et/ou à des circuits en série et parallèles combinés composés de plusieurs des grappes (1) ou réseaux de grappes est associé un moyen de commutation de courant (14, 14a).

8. Agencement de lampe selon l'une des revendications précédentes, **caractérisé par** un moyen de connexion (13) pouvant être actionné manuellement et pouvant être détaché ou interrompu, à l'aide duquel l'entrée d'activation (U') peut être couplée à différents composants de capteur, de commande ou à autres fonctions (18, 19, 20; 17).

9. Agencement de lampe selon l'une des revendications précédentes, **caractérisé par** une commande (17) et/ou des capteurs (18, 19, 20) disposés sur la plaquette (3) par lesquels l'entrée d'activation (U') du moyen du commutation de courant (14; 14a) est ou peut être connecté manuellement de manière amovible (13).

10. Agencement de lampe selon la revendication 9, **caractérisé par le fait que** la commande (17) est aménagée du point de vue technique de programme et/ou commutation pour alimenter à l'entrée d'activation (U') du moyen de commutation du courant (14, 14a) des signaux modulés en largeur d'impulsion.

11. Agencement de lampe selon la revendication 9 et l'une des revendications 5 et 6, **caractérisé par le fait que** la commande (17) est reliée, du côté de la sortie, à l'entrée d'activation (U_{BW}) du moyen de réglage d'intensité du courant (16,R_{c}) et aménagée du point de vue technique de programme et/ou commutation pour convertir des paramètres de DEL et/ou de luminosité introduits et/ou mémorisés en un signal d'activation approprié.

12. Agencement de lampe selon l'une des revendications 9 à 11, **caractérisé par le fait que** la commande (17) est pourvue d'une ou plusieurs interfaces d'entrée analogiques (ADW, ADW1, ADW2) destinées à capter le flux de courant (IE) passant par une ou plusieurs DEL ou modules de DEL (5), qui est aménagée du point de vue technique de programme et/ou commutation pour actionner, en fonction du flux de courant détecté (I_{E}), l'entrée d'activation (U_{S}) pour imprimer un courant continu pour la ou les DEL ou modules de DEL (5).

13. Agencement de lampe selon l'une des revendications précédentes, avec une source de tension continue alimentée ou pouvant être alimentée de l'extérieur par l'intermédiaire d'un élément de raccordement (7), **caractérisé par le fait que** par la sortie de la source de tension continue, une source de tension auxiliaire (11, 12) est alimentée en une tension de sortie (Undh) abaissée par rapport à la source de tension continue et est couplée ou peut être couplée de manière amovible et de préférence manuelle à l'entrée d'activation (Undₛ) du moyen du commutation de courant (14, 14a) pour son actionnement.

14. Agencement de lampe selon les revendications 8 et 13, **caractérisé par le fait que** la commande (17) est ou peut être couplée pour son alimentation en courant ou tension à la source de tension auxiliaire (11, 12).

15. Agencement de lampe selon l'une des revendications précédentes, **caractérisé par le fait que** le moyen de commutation de courant comporte une réalisation ou un moyen comme convertisseur DC-DC ou un autre régleur de courant continu qui est aménagé pour imprimer et réguler un courant continu passant respectivement par l'une au plusieurs des grappes (1, 1a, 1b) ou réseaux de grappes selon une comparaison d'une valeur réelle du courant continu avec une valeur de consigne prédéterminée pour le courant continu à imprimer.
